# NEUE EUROPÄISCHE PATENTSCHRIFT

(11) **EP 0 284 728 B2**
(45) Veröffentlichungstag und Bekanntmachung des Hinweises auf die Entscheidung über den Einspruch: **29.03.1995**
(45) Hinweis auf die Patenterteilung: 23.05.1990
(21) Anmeldenummer: 88101500.2
(22) Anmeldetag: 02.02.1988
(51) Int. Cl.: B60R 21/00

(54) **Schaltungsanordnung zum Auslösen eines Schutzsystems**
Circuit for actuating a protection device
Circuit pour déclencher un dispositif de protection

(30) Priorität: 24.02.1987 DE 3705867
(43) Veröffentlichungstag der Anmeldung: 05.10.1988
(73) Patentinhaber: SIEMENS AKTIENGESELLSCHAFT, 80333 München (DE)
(72) Erfinder: Swart, Marten, Ing. grad., D-8407 Obertraubling (DE); Matschi, Helmut, Dipl.-Ing.FH, D-8408 Barbing (DE)

(56) Entgegenhaltungen:
- EP-A- 0 022 146
- DE-A- 2 232 179
- DE-A- 2 309 111
- FR-A- 2 267 221
- US-A- 3 633 159
- US-A- 3 767 002
- US-A- 3 931 866
- Hütte IV A Elektrotechnik, Teil A, 28. Auflage, 1957, Seiten 16,17
- Zeitschrift "Ingénieurs de l'Automobile", 1982, No. 6,, Seiten 69 bis 77

## Beschreibung

Die Erfindung betrifft eine Schaltungsanordnung zum Auslösen eines Schutzsystems gemäß Oberbegriff von Anspruch 1.

Eine solche Schaltungsanordnung, insbesondere für ein Kfz-Airbag-System, weist in der Regel pro Airbag einen Serienzweig mit einem Auslöser und zwei in Serie geschalteten Auslösechaltern auf. Diese beiden Auslöseschalter werden von zwei unabhängig voneinander wirkenden Verzögerungssensoren betätigt, so daß nur beim Ansprechen beider Verzögerungssensoren eine Auslösung erfolgt.

Ist in dem Kraftfahrzeug ein Airbag für den Fahrer und den Beifahrer vorgesehen, so sind zwei solche Serienzweige erforderlich. Die beiden Serienzweige sind zueinander parallel geschaltet und werden von einer gemeinsamen Energiequelle, normalerweise der Fahrzeugbatterie, mit Spannung versorgt. Eine solche Schaltungsanordnung ist z.B. in der DE-A-2 309 111 beschrieben.

Als Auslöser für Kfz-Airbags finden normalerweise durch elektrischen Stromfluß ausgelöste chemische Zündpillen Verwendung. Die Zündpillen für Fahrer- und Beifahrer-Airbag sind, wie oben beschrieben, parallel geschaltet. Bedingt durch unterschiedliche Schaltzeiten der Auslöseschalter und verschiedene Reaktionszeiten der Zündpillen selbst erfolgt deren Zündung im Crash-Fall nicht gleichzeitig Nach Auslösung der ersten Zündpille ist aber eine sichere Zündung der zweiten Zündpille nur dann möglich, wenn die erste nach der Zündung hochohmig bleibt.

Durchgeführte Versuche mit derartigen Zündpillen haben ergeben, daß dies nicht immer der Fall ist. In einigen Fällen hinterließen Zündpillen nach der Zündung leitende Verbindungen, so daß die Energiequelle kurzgeschlossen und damit eine Zündung der zweiten Zündpille ausgeschlossen war.

Bei der FR-A-2 267 221 sind in jedem Zweig Schmelzsicherungen vorgesehen, die bei Kurzschluß durch Schmelzen verhindern, daß die noch übrigbleibende Ladung der einzigen Energiequelle abfließt.

Der Erfindung liegt deshalb die Aufgabe zugrunde, eine solche Schaltungsanordnung derart auszuführen, daß in jedem Fall die sichere Auslösung aller Zündpillen gewährleistet ist. Ein weiteres Anliegen einer Weiterbildung der Erfindung liegt darin, nach einem Unfall feststellen zu können, ob die Ursache für eine fehlerhaft nicht ausgelöste Zündpille in der Schaltungsanordnung begründet war oder in einem Fehler der Zündpille selbst.

Die erfindungsgemäße Lösung ist im Anspruch 1 gekennzeichnet.

Dabei ist in jedem Serienzweig ein ebenfalls in Serie liegender Kondensator vorgesehen. Im Auslösefall läßt dieser Kondensator einen kurzzeitigen Stromfluß zu, der den Auslöser aktiviert, wobei der Kondensator selbst geladen wird. Der Stromfluß kann nur solange anhalten, bis die Spannung am Kondensator gleich ist der Spannung an der Energiequelle. Ab diesem Zeitpunkt sperrt der Kondensator den Serienzweig, in dem er und die ausgelöste Zündpille liegen, unabhängig davon, ob die ausgelöste Zündpille einen Kurzschluß darstellt. Es kann also insbesondere keine weitere Ladungsmenge mehr in dem Serienzweig verbraucht werden, die zur Auslösung weiterer Zündpillen erforderlich ist.

Bei der Erfindung ist zusätzlich als Energiequelle ein Zündkondensator vorgesehen, da die Fahrzeugbatterie im Crash-Fall schlagartig vom Airbag-System abgetrennt oder zerstört werden kann. Der in jedem Serienzweig liegende Kondensator löst hier gleichzeitig das Problem, daß die im Auslösefall durch jeden Serienzweig fließende Ladungsmenge auch wegen des relativ geringen Energieinhaltes des Zündkondensators begrenzt werden muß.

Des weiteren ist ein Auswerter vorgesehen, der dazu dient, die ordnungsgemäße Funktion der Schaltungsanordnung dauerhaft zu dokumentieren. Zu diesem Zweck sind dem Auswerter die Spannungen an jedem Kondensator und jedem Auslöser zugeführt.

Tritt an einem der Auslöser ein Spannungssprung auf, so erkennt der Auswerter daran den Auslösezeitpunkt. Ab, diesem Auslösezeitpunkt mißt er nach Ablauf eines kurzen Meßintervalls die Spannung am zugehörigen Kondensator. Das Meßintervall ist so gewählt, daß bei intakter Schaltungsanordnung eine zur Auslösung ausreichende Ledungsmenge geflossen ist. Den Wert dieser Spannung legt der Auswerter in einem Speicher ab, der nur durch mechanische Zerstörung wieder löschbar ist. Der Spannungswert ist ein Maß dafür, welche Ladungsmenge tatsächlich durch den Auslöser geflossen ist. Damit ist nach einem Unfall, bei dem ein Auslöser nicht gezündet hat, eine Aussage darüber möglich, ob die Ursache in einer defekten Schaltungsanordnung oder einem defekten Auslöser begründet war.

Statt dem Spannungswert kann der Auswerter auch eine andere Größe in dem Speicher ablegen, z.B. die mit dem Spannungswert berechnete Ladungsmenge oder direkt die davon abgeleitete Aussage, ob diese Ladungsmenge zur Zündung ausreichend war.

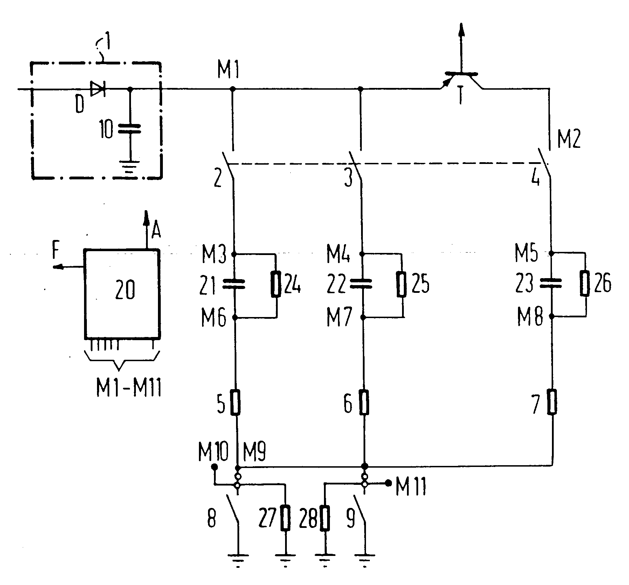

Ein Ausführungsbeispiel der Erfindung wird anhand der Figur näher erläutert.

Die dargestellte Schaltungsanordnung dient zum Auslösen eines Kfz-Airbag-Systems. Eine gemeinsame Energiequelle 1 ist an drei zueinander parallel geschaltete Serienzweige angeschlossen, die jeweils eine elektrisch betätigbare, chemische Zündpille 5, 6, 7 enthalten. Die Zündpillen 5, 6, 7 sind die Auslöser für zwei Airbags, wobei einer für einen Fahrer-Airbag und die beiden anderen für einen Beifahrer-Airbag vorgesehen sind. Der Beifahrer-Airbag hat zwei Auslöser, da er aufgrund des fehlenden Lenkrades größer sein muß als der Fahrer-Airbag und die Entfaltung in zwei Stufen erfolgt.

Die Energiequelle 1 enthält einen Zündkondensator 10, der mittels einer hier nicht dargestellten Ladeeinrichtung über die Diode D auf 36 Volt aufgeladen und ständig auf dieser Spannung gehalten wird.

Die drei vom Zündkondensator 10 gespeisten Serienzweige enthalten jeweils einen Auslöseschalter 2, 3, 4, einen Kondensator 21, 22, 23 mit je einem parallel geschlalteten Widerstand 24, 25, 26, die Zündpille 5, 6, 7 und einen weiteren Auslöseschalter 8, 9. Der Serienzweig mit der Zündpille 7 dient zur Auslösung der zweiten Stufe des Beifahrer-Airbags und enthält dazu noch einen Verzögerungstransistor T, dessen Emitter an die Energiequelle 1 und dessen Kollektor an den versorgungsspannungsseitigen Anschluß des Auslöseschalters 4 gelegt ist. Die Basis zur Ansteuerung des Verzögerungstransistors T ist mit einem Ausgang A eines Auswerters 20 verbunden.

Die Auslöseschalter 2, 3, 4 sind mechanisch gekoppelt, was durch die punktierte Linie angedeutet ist und werden von einem mechanischen Verzögerungssensor, einem sogenannten Safing-Sensor, betätigt. Als zweiter Schalter für jeden Serienzweig dient einer der beiden Auslöseschalter 8, 9, wobei jeder von einem eigenen mechanischen Verzögerungssensor, einem Frontsensor, gesteuert wird.

Eine Auslösung des Airbag-Systems erfolgt also dann, wenn der Safing-Sensor und einer der beiden Frontsensoren anspricht. Der Safing-Sensor ist dabei an einer zentralen Stelle des Kraftfahrzeugs angeordnet und die beiden Frontsensoren rechts vom und links vom am Fahrzeug.

Im Auslösefall wird nun eine der beiden Zündpillen 5, 6 zuerst auslösen, dann die andere, bedingt durch eine längere Schalt- oder Reaktionszeit und schließlich, nach der vom Verzögerungstransistor T bestimmten Verzögerungszeit die Zündpille 7. Als Beispiel sei angenommen, daß die Zündpille 5 als erste zündet und nach der Zündung ein Kurzschluß zwischen dem Kondensator 21 und Masse besteht Ohne diesen Kondensator 21 würde sich dadurch der Zündkondensator 10 vollständig entladen und eine Zündung der Zündpillen 6, 7 wäre ausgeschlossen. Das Vorhandensein des Kondensators 21 läßt jedoch einen Stromfluß nur solange zu, bis der Kondensator 21 auf die 36 Volt des Zündkondensators 10 aufgeladen ist und unterbricht dann den Stromfluß. Dies ermöglicht die Zündung der Zündpille 6, wonach die Vorgänge in deren Serienzweig analog denen bei der zuerst gezündeten Zündpille 5 ablaufen. Damit ist auch eine sichere Zündung der über den Verzögerungstransistor T verzögert ausgelösten Zündpille 7 möglich. Die Verzögerungszeit beträgt 10 Millisekunden ab dem Auslösezeitpunkt der ersten Zündpille 5 und wird vom Auswerter 20 bestimmt, der am Ausgang A eine Steuerspannung für den Verzögerungstransistor liefert.

Die Kapazität der Kondensatoren 21, 22, 23 ist so gewählt, daß einerseits die begrenzte Ladungsmenge zur Zündung der Zündpillen 5, 6, 7 groß genug ist und andererseits der Energieinhalt des Zündkondensators 10 für alle Zündpillen 5, 6, 7 sicher ausreicht. Für den verwendeten Zündkondensator 10 mit 4,7 Millifarad wurden dafür die Kondensatoren 21, 22, 23 zu jeweils einem Millifarad gewählt.

Der Auswerter 20 dient weiterhin zur Dokumentation von Fehlfunktionen sowie für diverse Überwachungsaufgaben. Er weist einen Mikroprozessor mit einem PROM sowie eine integrierte Schaltung auf, über die er mit Meßpunkten M1 bis M11 der übrigen Schaltung verbunden ist.

Die integrierte Schaltung dient als Schnittstelle zwischen dem digital arbeitenden Mikroprozessor und den analogen Spannungen und Strömen von und zu den Meßpunkten M1 bis M11 sowie dem Verzögerungstransistor T.

Der Auswerter 20 führt über die Meßpunkte M1 bis M11 Spannungs-, Strom- und Widerstandsmessungen durch. So werden zyklisch wiederkehrend im Bereitschaftsbetrieb der Schaltungsanordnung bewertet:
- Die Spannungen U_{M1-M3}, U_{M1-M4} und U_{M1-M5} an den Auslöseschaltern 2, 3, 4 (Fehler bei geschlossenem Schalter im Bereitschaftsbetrieb);
- die Spannungen U_{M6-M9}, U_{M7-M9} und U_{M8-M9} zum Erkennen des jeweiligen Auslösezeitpunkts, der bei Erreichen einer Spannung von 4 Volt angenommen ist;
- eine Widerstandsmessung mit Konstantstrom an den Meßpunkten M3 bis M11 gegen Masse (Fehler bei Kurzschluß eines Meßpunktes gegen Masse);
- eine Widerstandsmessung an den Zündpillen zwischen den Meßpunkten M6 und M9, M7 und M9 sowie M8 und M9 zum Erkennen von Veränderungen in den Zündpillen 5, 6, 7 (Fehler bei Abweichen von Herstellerangabe);
- die Kapazität der Kondensatoren durch Spannungsmessung nach einem Konstantstrom der Zeit t über M3 und M6, M4 und M7 sowie M5 und M8 (Fehler bei zu kleiner Kapazität = Kondensator defekt);
- eine Übergangswiderstandsmessung zwischen M9 und M10 bzw. M9 und M11 an den Auslöseschaltern 8, 9 der Frontsensoren - die verwendeten, Auslöseschalter 8, 9 haben versorgungsspannungsseitig zwei Kontakte, die im Schalter elektrisch miteinander verbunden sind. Dadurch ist nach Anlöten der externen Beschaltung an den Kontakten eine Übergangswiderstandsmessung der Lötstellen sowie der Anschlußleitungen möglich. In der Zeichnung sind die Lötstellen mit kleinen Kreisen gekennzeichnet - (Fehler bei zu großem Übergangswiderstand).

Die Meßpunkte M10 und M11 sind außerdem über einen der Kontakte der Auslöseschalter 8, 9 mit je einem Widerstand 27, 28 verbunden, dessen anderer Anschluß an Masse gelegt ist. Durch diese Verbindungen, also über M10 und M11, erhält der Auswerter 20 sein Bezugspotential.

Stellt der Auswerter 20 bei einer der vorausgehend beschriebenen Messungen eine fehlerhafte Bedingung fest, so speichert er deren Ergebnis in dem PROM ab und erzeugt eine Fehlermeldung F, die zur Warnung des Fahrers führt.

Erreicht die Spannung an einer der Zündpillen 5, 6, 7 den Wert von 4 Volt, so ist deren Auslösezeitpunkt gegeben. Der Auswerter 20 erfaßt dann 3 Millisekunden später die Spannung am jeweils zugehörigen Kondensator 21, 22, 23 und legt diese in dem PROM ab. Dieser Spannungswert erlaubt mit Kenntnis der elektrischen Größen der Schaltungselemente die Berechnung der für die Zündung bis zum Ablauf der Meßzeit von 3 Millisekunden geflossene Ladungsmenge. Im Auslösefall wird diese Messung an jedem der Kondensatoren 21, 22, 23 durchgeführt. Die diesbezüglichen in dem PROM abgespeicherten Spannungswerte erlauben damit noch nach einem Unfall eine Aussage über die ordnungsgemäße Funktion der Schaltungsanordnung. War die während der Meßzeit geflossene Ladungsmenge zur Zündung einer der Zündpillen 5, 6, 7, verglichen mit der Herstellerangabe, ausreichend und ist die Zündung trotzdem nicht erfolgt, so lag die Ursache dafür bei der jeweiligen Zündpille.

Eine vorteilhafte Erwerterung der Erfindung ist der jeweils zu den Kondensatoren 21, 22, 23 parallel geschaltete Widerstand 24, 25, 26. Im Bereitschaftsbetrieb der Schaltungsanordnung sorgt dieser dafür, daß die Kondensatoren 21, 22, 23, nach jeder Kapazitäts- oder anderweitigen Messung, wieder vollständig entladen werden. Damit ist für die jeweilige Messung sowie für die Ladungsmengenbegrenzung im Auslösefall ein definierter Ausgangszustand - Kondensator entladen - gegeben.

## Patentansprüche

1. Schaltungsanordnung zum Auslösen eines Schutzsystems, insbesondere eines Airbag-Systems,
- mit einer einen Zündkondensator (10) enthaltenden Energiequelle (1),
- mit mindestens einem Auslöseschalter (2, 3, 4 , 8 , 9),
- mit mindestens zwei parallel geschalteten Serienzweigen,
die je einen Auslöser (5, 6, 7) für das Schutzsystem enthalten, dadurch gekennzeichnet,
daß in jedem Serienzweig jeweils ein Kondensator (21,22,23) in Serie zum Auslöseschalter (2, 3, 4) liegt, der vor dem Auslösevorgang entladen ist und im Auslösefall durch einen kurzzeitigen Stromfluß aufgeladen wird und dadurch eine durch den jeweiligen Serienzweig fließende Ladungsmenge begrenzt.

2. Schaltungsanordnung nach Anspruch 1, **dadurch gekennzeichnet**, daß einem Auswerter (20) die Spannung an jedem Kondensator (21, 22, 23) zugeführt ist, daß der Auswerter (20) diese Spannung am Ende eines Meßintervalls, das mit dem Auslösezeitpunkt beginnt, erfaßt und deren Spannungswert in einem Speicher ablegt.

3. Schaltungsanordnung nach Anspruch 2, **dadurch gekennzeichnet**, daß dem Auswerter (20) die Spannung an jedem Auslöser (5, 6, 7) zugeführt ist und er aus einem Spannungssprung den Auslösezeitpunkt erkennt.

4. Schaltungsanordnung nach Anspruch 3, **dadurch gekennzeichnet**, daß der Auswerter (20) aus dem Spannungswert eine andere Größe ableitet und diese in dem Speicher ablegt.

5. Schaltungsanordnung nach Anspruch 2, 3 oder 4, **dadurch gekennzeichnet**, daß der Inhalt des Speichers nur durch mechanische Zerstörung löschbar ist.

6. Schaltungsanordnung nach Anspruch 2, 3, 4 oder 5, **dadurch gekennzeichnet**, daß der Auswerter (20) eine integrierte Schaltung und einen Mikroprozessor mit Speicher enthält

7. Schaltungsanordnung nach einem der vorhergehenden Ansprüche, **dadurch gekennzeichnet**, daß parallel zu jedem Kondensator (21, 22, 23) ein Widerstand (24, 25, 26) geschaltet ist.

## Claims

1. Circuit arrangement for triggering a safety system, preferably an air bag system,
- having an energy source (1) containing an ignition capacitor (10),
- having at least one trigger switch (2, 3, 4, 8, 9),
- having at least two series branches connected in parallel which each contain one trigger (5, 6, 7) for the safety system, characterized in that there is in each series branch in each case one capacitor (21, 22, 23) in series with the trigger (2, 3, 4), which capacitor is discharged by the triggering process and in the event of triggering is charged by a brief flow of current and thus limits an amount of charge flowing through the respective series branch.

2. Circuit arrangement according to Claim 1, characterized in that the voltage at each capacitor (21, 22, 23) is fed to an evaluator (20), in that the evaluator (20) intercepts this voltage at the end of a measuring interval which begins with the trigger point and deposits the value of the voltage in a memory.

3. Circuit arrangement according to Claim 2, characterized in that the voltage at each trigger (5, 6, 7) is fed to the evaluator (20) and it detects the trigger point from a voltage jump.

4. Circuit arrangement according to Claim 3, characterized in that the evaluator (20) derives from the voltage value another variable and deposits this in the memory.

5. Circuit arrangement according to Claim 2, 3 or 4, characterized in that the contents of the memory can only be deleted by mechanical destruction.

6. Circuit arrangement according to Claim 2, 3, 4 or 5, characterized in that the evaluator (20) contains an integrated circuit and a microprocessor with memory.

7. Circuit arrangement according to one of the preceding claims, characterized in that a resistor (24, 25, 26) is connected in parallel to each capacitor (21, 22, 23).

## Revendications

1. Montage pour déclencher un système de protection, notamment un système à coussins pneumatiques, comprenant
- une source d'énergie (1) comportant un condensateur d'amorçage (10),
- au moins un interrupteur de déclenchement (2, 3, 4, 8, 9),
- deux branches série, qui sont montées en parallèle et qui comportent chacune un déclencheur (5, 6, 7) pour le système de protection,
caractérisé en ce que
dans chaque branche série est monté en série avec l'interrupteur de déclenchement (2, 3, 4) un condensateur (21, 22, 23) qui est déchargé avec l'opération de déclenchement et est chargé par un flux de courant de brève durée en cas de déclenchement et limite ainsi la quantité de charge s'écoulant dans la branche série concernée.

2. Montage suivant la revendication 1, caractérisé en ce que la tension aux bornes de chaque condensateur (21, 22, 23) est envoyée à un dispositif d'évaluation (20), que ce dernier (20) détecte la tension à la fin d'un intervalle de mesure, qui commence avec l'instant de déclenchement, et introduit la valeur de tension dans une mémoire.

3. Montage suivant la revendication 2, caractérisé en ce que la tension aux bornes de chaque déclencheur (5, 6, 7) est envoyée au dispositif d'évaluation (20) et que ce dernier identifie l'instant de déclenchement, à partir d'un saut de tension.

4. Montage suivant la revendication 3, caractérisé en ce que le dispositif d'évaluation (20) déduit de la valeur de tension une autre grandeur et l'introduit dans la mémoire.

5. Montage suivant la revendication 2, 3 ou 4, caractérisé en ce que le contenu de la mémoire ne peut être effacé que par destruction mécanique.

6. Montage suivant la revendication 2, 3, 4 ou 5, caractérisé en ce que le dispositif d'évaluation (20) comporte un circuit intégré et un microprocesseur pourvu d'une mémoire.

7. Montage suivant l'une des revendications précédentes, caractérisé en ce qu'une résistance (24, 25, 26) est branchée en parallèle à chaque condensateur (21, 22, 23).
